(19) Europäisches Patentamt / European Patent Office / Office européen des brevets

(11) EP 3 674 384 B1

(12) **EUROPEAN PATENT SPECIFICATION**

(45) Date of publication and mention of the grant of the patent:
**02.06.2021 Bulletin 2021/22**

(51) Int Cl.:
***C10L 1/02*** *(2006.01)* ***C11C 3/10*** *(2006.01)*
***C12P 7/64*** *(2006.01)*

(21) Application number: **19219749.9**

(22) Date of filing: **27.12.2019**

(54) **BIODIESEL FUEL AND METHOD FOR PRODUCTION THEREOF**

BIODIESELKRAFTSTOFF UND VERFAHREN ZUR HERSTELLUNG DAVON

CARBURANT BIODIESEL ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2018 LV 180110**

(43) Date of publication of application:
**01.07.2020 Bulletin 2020/27**

(73) Proprietor: **Rigas Tehniska universitate**
**1658 Riga (LV)**

(72) Inventors:
- **KAMPARS, Valdis**
**1082 Rïga (LV)**
- **LAIPNIECE, Lauma**
**1039 Rïga (LV)**

(74) Representative: **Kromanis, Artis**
**Petersona patents - AAA Law, SIA**
**Citadeles Street 12, 3rd floor**
**1010 Riga (LV)**

(56) References cited:
- **LAUMA LAIPNIECE ET AL: "Analysis of Products Obtained in Chemical Interesterification of Rapeseed Oil with Methyl Formate", KEY ENGINEERING MATERIALS, vol. 800, 26 October 2018 (2018-10-26), pages 93-97, XP055633533, Riga, Latvia DOI: 10.4028/www.scientific.net/KEM.800.93**
- **Lauma Laipniece ET AL: "Analysis of products obtained in chemical interesterification of rapeseed oil with methyl formate", 50th International Scientific Conference of Riga Technical University, 26 October 2018 (2018-10-26), XP055769969,**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 674 384 B1

## Description

The present invention relates to the energy sector, in particular to the production and use of renewable fuel for use in diesel engines and heating systems for heating devices provided for medium petroleum distillates, which are usually referred to as biodiesel.

State of prior art

Europe is the main producer and consumer of biodiesel [1]. Its production capacity exceeds 21 million tons per year, while production is around 12 million tons per year. Industrial biodiesel is produced from triglycerides (vegetable oils, animal fats, waste oils, algae oils, etc.). In order to be able to use biodiesel as fuel for diesel engines and heating, biodiesel must comply with the requirements of standard LVS EN 14214 + A1 [2]. Biodiesel has found the most extensive use as a diesel additive for petrol diesel up to 7% by mass. Mixed fuels have proved to be the most suitable in practice for the operation of diesel engines and heating systems under different climatic conditions and operating modes, so their worldwide use continues to increase. The production and use of biodiesel are an essential part of the slowing the rate of climate change policy and allow both greenhouse gas emissions and other emission performance of engines and combustion plants to be reduced, as well as to reduce the dependency on oil exporting countries in the economic activity of the state. Production of other renewable fuels is significantly lower than biodiesel production and biodiesel will remain dominant in the near future, therefore improvement of the biodiesel production process is of great importance.

Industrially biodiesel (a mixture of fatty acid methyl esters, identified as FAME) is produced as a result of transesterification of edible and non-edible vegetable oils, animal fats, waste oils or other triglycerides (TG) with methanol (MeOH), according to the reaction equation (1):

$$\mathrm{TG+3MeOH \leftrightarrows 3FAME+G}, \qquad (1)$$

glycerol (G) is formed as a by-product which cannot be incorporated into the fuel as glycerol does not mix with the biodiesel layer and settles down [3].

The forming of glycerol increases the cost of production of biodiesel, as fuel treatment techniques should be used additionally, which produce wastewater that needs to be treated. The crude glycerol by-product itself is of low quality, its quality improvement is expensive, and the glycerol market is saturated. The crude glycerol could be used for the synthesis of valid glycerol derivatives, such as glycerol ethers [4], but production process should then be supplemented with a new production stage and a new production area. A fundamental deficiency of this method is that the synthesis of glycerol derivatives is more labour-intensive, sophisticated, and with lower yields than the FAME synthesis itself.

Biodiesel production costs could be reduced if other by-product with potentially higher market price was synthesised instead of glycerol without introduction of additional production areas. No such path has been found until now. The only known process likely to meet the aim could be the interesterification of TG according to the reaction (2), which would form such a polar reaction by-product that would not mix with the FAME layer and would remove from the reaction mixture in the form of a separate layer:

$$\mathrm{TG+3MeX \leftrightarrows 3FAME+GE}, \qquad (2)$$

where MeX - carboxylic acid XH methyl ester, GE - carboxylic acid XH glycerol esters, which do not mix with FAME but form a distinct, easily separable layer of the by-product. Methyl acetate is the most commonly used reagent in an interesterification reaction, allowing to obtain a mixture of FAME and triacetin (GE = TA). TA does not form a separate layer, it could be included in the fuel composition [5], but the method of its separation from the mixture is unknown. Inclusion of TA in fuel composition increases the yield of biofuel and the full conversion of TG into biofuel, the characteristics of which do not meet the requirements of standard LVS EN 14214 + A1. Publications [5, 6] show that interesterification reaction with methyl acetate at low temperatures and atmospheric pressure can be carried out quickly using chemical rather than enzymatic catalysis, only a high methyl acetate to oil molar ratio (MAOMR) is needed - up to 50. Works [7, 8] show that high MAOMR values are needed to reduce the kinematic viscosity of the product. The patent [9] protects a multi-stage process for conducting an interesterification reaction using an ultrasound reactor which is followed by two reactors with mechanical mixing. Reaction time is 5-90 min and reaction temperature is 20-120 °C. Since the boiling point of methyl acetate is 57 °C, but of ethyl acetate - 77 °C, the reaction must be performed at increased pressure to ensure full conversion, as a temperature above boiling point is required. The increased pressure and temperature, as well as additional processes to ensure homogenisation, are the main shortcomings of this method. The reaction results in the production of mixtures of FAME together with the glycerides of low molecular weight and the TA. The

excess reagent is distilled off and biodiesel is obtained by distillation of fatty acid methyl esters or ethyl esters at reduced pressure. Thus, sophisticated and expensive equipment is used, which significantly increases production costs and is the main drawback of this method, and the biofuels are produced, some of which do not comply with the requirements of standard LVS EN 14214 + A1.

A prototype of an invention is adopted from known technical solutions of a method described in the patent [10]. In accordance with this method, biodiesel is produced at atmospheric pressure by introducing a catalyst potassium *tert*-butoxide 1 molar solution in tetrahydrofuran in a pre-prepared mixture of oil and methyl acetate. The full conversion of TG to biofuel with kinematic viscosity of no more than 5 $mm^2/s$ (without treating the reaction product with water or using other purification methods) is achieved using MAOMR greater than 24, a catalyst to oil molar ratio (COMR) 0.11-0.13, and a reaction temperature of 50-60 °C for a maximum of 1 hour. The lack of method is a non-compliance of the resulting product with all requirements of standard LVS EN 14214 + A1, due to the inclusion of intermediate products and TA in the fuel composition, the inclusion of which is not provided for by the said standard. In particular, the inclusion of the TA in fuel composition makes not possible to fulfil the requirements in characteristics such as FAME content, density, and carbon residue. The FAME content of the reaction mixture does not exceed 75% [11]. The separation method of TA from the resulting homogenous reaction mixture and the method for increasing the FAME content are unknown.

US patent application publication No. US2006/257986 discloses a method of synthesizing biodiesel from renewable oils, comprising: carrying out a interesterification reaction, in the presence of an enzyme catalyst, between a low carbon fatty acid ester RCOOR' as an acyl acceptor and a renewable oil, wherein the interesterification reaction producing a glycerine tri-(low carbon) carboxylic ester by-product, and reacting the glycerine tri-(low carbon) carboxylic ester by-product with a low carbon alcohol R'OH to obtain the low carbon fatty acid ester. FAME is obtained as a mixture of FAME with low carbon fatty acid esters of glycerol and mass fraction of FAME does not exceed 75%.

Japanese patent application publication No. 2007 169173 discloses a method for producing the fatty acid alkyl ester by using a fatty acid glyceride contained in raw material oils and fats wherein the method includes an ester-interchange reaction between the fatty acid glyceride with an alcohol under a supercritical or subcritical condition, and an ester-interchange reaction between the fatty acid glyceride with a carboxylic acid ester under the supercritical or subcritical condition, and from each of the reactions, the fatty acid alkyl ester useful as a bio diesel fuel is obtained.

Summary of the invention

Present invention is a method of obtaining biodiesel from vegetable oil, as disclosed in the appended claims. The method includes the following steps. In the beginning a mixture of vegetable oil and methyl formate is prepared by keeping it for at least 4 days on 3-4 Å molecular sieves. In result of aforementioned step a water content in the mixture of vegetable oil and methyl formate is less than 0.01%. Next step involves heating of the prepared mixture of vegetable oil and methyl formate up to 25°C while continuously stirring. It is followed by performance of chemically catalysed interesterification reaction. The chemically catalysed interesterification reaction is performed at atmospheric pressure and temperatures in the range of 28°C to 32°C. The following temperature range is low compared to the prior-art technological processes. Catalyst to refined rapeseed oil molar ratio (COMR) is used in the range of 0.1-0.15. Reagent to vegetable oil molar ratio (MFOMR) is used in the range of 1:36-1:42. The reaction time is kept in the range of 30 to 45 minutes which is short reaction time compared to the prior art. Potassium *tert*-butoxide solution in *tert*-butanol (BuOK/BuOH) or potassium *tert*-butoxide solution in tetrahydrofuran (BuOK/BUOH) is used as the catalyst. Methyl formate is used as a reagent. The next step includes neutralisation of catalyst in the reaction mixture by adding 85% $H_3PO_4$. After neutralisation the reaction mixture is cooled down to a room temperature. Cooled down mixture is filtered from sediments which is followed by in the temperature at about 60°C in order to distillate reagent excess. Next step includes settlement of the filtered reaction mixture for at least 2 hours so that separate layers of biodiesel and mixture of formines are formed.

After the aforementioned step of settlement, a separation of biodiesel layer from layer of mixture of formines is performed. Optionally, the mixture of formines might be filtered. In result of aforementioned step mixture of formines is obtained having the following content: glycerol with less than 9 wt.%, triformin of 5-6 wt.% and dominant monoformylglycerol of 41-44 wt.% and diformylglycerol of 42-46 wt.%.

After the aforementioned step of settlement, a separation of biodiesel layer from layer of mixture of formines is performed. FAME layer with a FAME content exceeding 90% is separated. As FAME layer additionally contains byproducts, layer mass is bigger than separate FAME mass and FAME layer yield exceeds 106%. After the purification of FAME layer said yield will not exceed 100%. The yield is calculated by weighting the FAME layer and attributing the mass to the mass of oil used for reaction:

$$\text{Yield} = \text{mass of FAME layer/mass of oil used} \cdot 100.$$

The separated biodiesel has following properties meeting the requirements of standard LVS EN 14214 + A1: flash point, density, kinematic viscosity, carbon residue, and pour point.

Detailed description of the invention

The purpose of the invention is to modify a one-stage synthesis scheme in such a way that the interesterification reaction with a suitable monoester results in a reaction product which, as in the case of transesterification reactions, consists of two separable layers: the FAME layer and the formine layer. The acquired FAME layer must conform to a crude product with a FAME content of no less than 90% and which, like the FAME layer in the transesterification process, can be purified to the requirements of standard LVS EN 14214 + A1. The composition of the formine layer must be significantly different from that of crude glycerol in a transesterification reaction and it must be a new by-product of FAME production with a glycerol content of less than 9%. Thus, the purpose of the invention is to obtain a new by-product, at the same time with fuel. Reaction (2) with methyl formate results in a by-product mixture of monoformylglycerol (A), diformylglycerol (B), triformylglycerol (C), and glycerol:

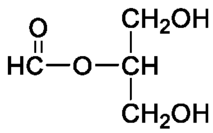

A

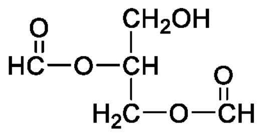

B

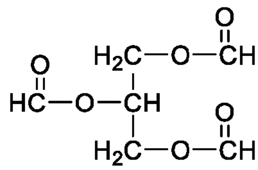

C

The new by-product consists of formic acid esters. According to the patents, formic acid esters have antiseptic [12, 13] and repellent [14] properties which can be used to produce valuable market products on their basis. The new by-product thus obtained may have a higher market value than the known one. The purpose of the invention is also to decrees amount of energy to be consumed by production of biodiesel. In result the process is conducted under atmospheric pressure and at low temperatures (28 to 32°C), The purpose of the invention is to obtain a FAME crude product complying with the requirements of standard LVS EN 14214 for characteristics such as viscosity, density, carbon residue and freezing point, in order to increase the FAME content to the standard requirements in additional purification as in the industrial transesterification process [15]. The purpose of the invention is therefore to obtain a FAME crude product with a fatty acid methyl ester content of at least 90% at the same time as obtaining a new by-product which could be of higher value and perspective than glycerol.

In order to achieve the aim and to conduce biodiesel synthesis from TG (vegetable oils, waste oils, and animal fats) at one stage with formation of two layers, one of which is a layer of FAME, and the other is layer of formines, by executing synthesis at atmospheric pressure, low temperature (28 to 32°C), and in short time (reaction time is less than 45 min), an interesterification reaction with methyl formate is performed according to the equation (2). The use of *tert*-butoxide 1M solution in tetrahydrofuran (BuOK/THF) or *tert*-butanol (BuOK/BuOH) as a catalyst excludes the transesterification reaction with the catalyst solvent and the formation of glycerol in the transesterification process. As the data from the tables demonstrate, the aim of the invention has been achieved by using reagent methyl formate (MeF) with MeF to oil molar ratio (MFOMR) at least 36. The process of the invention is done using following conditions: 1M BuOK/THF or 1M BuOK/BuOH should be used as a catalyst, COMR should be 0.1-0.15, the reaction is administered at 28-32 °C, and reaction time is 30-45 minutes. The reaction mixture is neutralized adding the calculated quantity of 85% $H_3PO_4$ and by continuing to stir the reaction mixture for another 15 minutes, then the contents of the flask are cooled to room temperature and filtered. The filtrate is evaporated and left for layers to settle for 2 hours, then carefully separate the formed two layers, formines layer is filtered and the characteristics of both layers are determined. Testing of FAME layer properties is performed in accordance with standard LVS EN 14214 + A1. The formines layer is analysed using the liquid chromatographic method with an ultraviolet detector.

Preferred embodiments of the invention

The following examples illustrate the nature of the invention but do not in any way restrict its use. The characteristics of biofuels resulting from the applying of the examples are summarised in tables 1, 2 and 3.

Example 1

250 g of refined rapeseed oil and 469 g of methyl formate previously kept for at least 4 days on 4 Å molecular

sieves to reach water content less than 0.01 % are poured into 2L double-necked round-bottom flask equipped with a thermometer and reflux condenser with calcium chloride tube. The contents of the flask are heated to 25 °C while continuously stirring, then the catalyst - 28.0 mL 1M BuOK/BuOH is added. After 30 minutes, the reaction mixture is neutralized by adding 1.0 mL of 85% $H_3PO_4$, stirring is continued for 15 minutes, then the contents of the flask are cooled to room temperature (approx. 20°C) and filtered. The filtrate is evaporated and left for 2 hours to settle the layers, then carefully separate the formed two layers, formines layer is filtered. The upper layer contains FAME and the lower layer contains glycerol and its formates.

Example 2

The procedure for obtaining the product is the same as in example 1, except that 603 g of methyl formate is used and the reaction temperature is 32 °C.

Example 3

The procedure for obtaining the product is the same as in example 2, except that 704 g of methyl formate is used.

Example 4

The procedure for obtaining the product is the same as in example 2, except that the reaction time is 45 minutes.

Example 5

The procedure for obtaining the product is the same as in example 4, except that 42.0 mL of 1M BuOK/BuOH and 1.4 mL of 85% $H_3PO_4$ are used.

Example 6

The procedure for obtaining the product is the same as in example 4, except that 22.5 mL of 1M in BuOK/BuOH and 0.8 mL of 85% $H_3PO_4$ are used.

Example 7

The procedure for obtaining the product is the same as in example 2, except that the reaction temperature is 28 °C.

Example 8

The procedure for obtaining the product is the same as in example 2, except that 1M BuOK/THF is used.

Example 9

The procedure for obtaining the product is the same as in example 2, except that the reaction time is 20 minutes.

Example 10

The procedure for obtaining the product is the same as in example 2, except that the reaction time is 60 minutes.

Table 1

| Synthesis of FAME and formines (For) in the chemical interesterification reaction of rapeseed oil | | | | | | | | |
|---|---|---|---|---|---|---|---|---|
| Product | MFOMR | COMR | Temp., °C | Time, min | Mass, g | Yield of layer, % | Overall yield, % | FAME, % |
| 1 FAME | 28 | 0.10 | 25 | 30 | 265.3 | 105.7 | 97.0 | 87.2 |
| 1 For | | | | | 25.8 | 52.5 | | |
| 2 FAME | 36 | 0.10 | 32 | 30 | 267.4 | 106.5 | 97.1 | 90.0 |
| 2 For | | | | | 24.0 | 48.9 | | |

(continued)

| Synthesis of FAME and formines (For) in the chemical interesterification reaction of rapeseed oil | | | | | | | | |
|---|---|---|---|---|---|---|---|---|
| Product | MFOMR | COMR | Temp., °C | Time, min | Mass, g | Yield of layer, % | Overall yield, % | FAME, % |
| 3 FAME | 42 | 0.10 | 32 | 30 | 267.4 | 106.5 | 97.4 | 90.3 |
| 3 For | | | | | 24.9 | 50.7 | | |
| 4 FAME | 36 | 0.10 | 32 | 45 | 268.8 | 107.0 | 97.8 | 90.3 |
| 4 For | | | | | 24.7 | 50.3 | | |
| 5 FAME | 36 | 0.15 | 32 | 45 | 271.3 | 108.0 | 98.2 | 90.9 |
| 5 For | | | | | 23.5 | 47.9 | | |
| 6 FAME | 36 | 0.08 | 32 | 45 | 264.7 | 105.4 | 96.4 | 89.1 |
| 6 For | | | | | 24.7 | 50.3 | | |
| 7 FAME | 36 | 0.10 | 28 | 30 | 267.1 | 106.4 | 97.1 | 90.3 |
| 7 For | | | | | 24.4 | 49.7 | | |
| 8 FAME | 36 | 0.10 | 30 | 30 | 268.5 | 106.9 | 97.8 | 90.5 |
| 8 For | | | | | 25.1 | 51.1 | | |
| 9 FAME | 36 | 0.10 | 30 | 20 | 266.2 | 106.0 | 96.7 | 88.1 |
| 9 For | | | | | 24.0 | 48.9 | | |
| 10 FAME | 36 | 0.10 | 30 | 60 | 267.1 | 106.4 | 97.0 | 89.1 |
| 10 For | | | | | 24.2 | 49.3 | | |

The mass of the products is determined by weighing. The yield of layer is calculated from the obtained mass of the products and the theoretically expected mass of the products (FAME and TF) according to the equation (2).

Table 2

| Composition of FAME and formin (For) layers for syntheses with FAME content exceeding 90% | | | | | | | | | |
|---|---|---|---|---|---|---|---|---|---|
| Sample | MG | MFMG | DFMG | DG | MFDG | G | MFG | DFG | TF |
| 2 FAME | 1.10 | 1.32 | 4.35 | 0.01 | 0.63 | 0.06 | 1.36 | 1.77 | 0.00 |
| 2 For | | | | | | 8.34 | 42.76 | 43.30 | 5.60 |
| 3 FAME | 0.99 | 1.14 | 4.01 | 0.01 | 0.51 | 0.00 | 1.22 | 1.82 | 0.00 |
| 3 For | | | | | | 7.89 | 42.91 | 43.80 | 5.40 |
| 4 FAME | 1.07 | 1.17 | 3.93 | 0.01 | 0.38 | 0.04 | 1.15 | 1.97 | 0.00 |
| 4 For | | | | | | 6.58 | 41.32 | 45.6 | 6.50 |
| 5 FAME | 0.98 | 1.07 | 3.34 | 0.00 | 0.09 | 0.06 | 1.44 | 2.07 | 0.00 |
| 5 For | | | | | | 8.31 | 44.19 | 41.90 | 5.60 |
| 7 FAME | 1.12 | 1.32 | 4.33 | 0.01 | 0.63 | 0.06 | 1.32 | 1.74 | 0.00 |
| 7 For | | | | | | 8.31 | 42.79 | 43.20 | 5.70 |
| 8 FAME | 1.05 | 1.30 | 4.31 | 0.01 | 0.63 | 0.06 | 1.37 | 1.75 | 0.00 |
| 8 For | | | | | | 8.35 | 42.74 | 43.40 | 5.50 |
| MG - monoglycerides, MFMG - monoformylmonoglycerides, DFMG - diformylmonoglycerides, DG - diglycerides, MFDG - monoformyldiglycerides, G - glycerol, MFG - monoformin, DFG - diformin, TF - triformin | | | | | | | | | |

Table 3

| Fuel properties for products with FAME content exceeding 90% | | | | | | | |
|---|---|---|---|---|---|---|---|
| Sample | Flashpoint, °C | Density, kg/$m^3$ | Viscosity, $mm^2$/s | Carbon residue, % | CP, °C | CFPP, °C | PP, °C |
| 2 FAME | >200 | 888.7 | 3.9489 | 0.01 | -7 | -9 | -16 |
| 3 FAME | >200 | 894.0 | 4.28 | 0.02 | -5 | -6 | -13 |
| 4 FAME | >180 | 894.1 | 4.23 | 0.01 | -6 | -7 | -13 |
| 5 FAME | >200 | 894.8 | 4.16 | 0.02 | -5 | -5 | -13 |
| 7 FAME | >190 | 894.3 | 4.18 | 0.01 | -6 | -6 | -13 |
| 8 FAME | >200 | 894.2 | 4.12 | 0.01 | -6 | -7 | -13 |

References cited in the description


[1] https://www.statista.com/statistics/271472/biodiesel-production-in-selected-countries/.

[2] LVS EN14214+A1 Automotive fuels - fatty acid methyl esters (FAME) for diesel engines - requirements and test methods. LVS 2011, 1-16.

[3] A.Demirbas. Biodiesel, Springer, 2008, ISBN 978-1-84628-994-1.

[4] European patent EP 2953921 B1; One-pot process for the production of biodiesel and glycerol ether mixtures useful as biofuels, IPC - C07C 67/24, C10L 1/100, B01J 19/12, C07C 41/09, C10L 1/185 (authors of the invention: Nicolosi G., Drago C., Liotta L., V.Parola, Testa M.L.), 2017.

[5] Z.Sustere, V.Kampars. Chemical interesterification of rapeseed oil with methyl acetate in presence of sodium methoxide in methanol and potassium tert-butoxide in tert-butanol. International Journal of Engineering and Technical Research (IJETR), 2015, 3 (10), 226-232.

[6] A.Casas, M.J.Ramos, A.Perez. Production of Biodiesel through Interesterification of Triglycerides with Methyl Acetate. ISBN: 978-1-62808-565-5, Nova Science Publishers, Inc., 2013, Chapter 6, pp. 144-186.

[7] Z.Sustere, R.Murnieks, V.Kampars. Chemical interesterification of rapeseed oil with methyl, ethyl, propyl and isopropyl acetates and fuel properties of obtained mixtures. Fuel Processing Technology, 149, 2016, 320-325.

[8] K.Malins, V.Kampars, R.Kampare, Z.Sustere, A.Arenta. Production of biodiesel and triacetin by interesterification of rapeseed oil. Proceedings of MSAC 2017, Riga, 2017, ISBN: 978-3-0357-1238-4, Key Engineering Materials, 762, 2017, 129-133

[9] World patent WO 2015093991; Continuous industrial method for the production of biodiesel fuel, IPC - B01J 19/10, C10L 1/02, C11C 3/10 (author of the invention: Scaparro A.L.), 2015.

[10] Latvian patent LV15373 (A); Biodiesel and process for producing thereof, IPC - C10L 1/02; C11C 3/10; C12P 7/64 (authors of the invention: Kampars V., Kampare R., Šustere Z.), 2018.

[11] V.Kampars, Z.Sustere, R.Kampare. Biofuel via interesterification of rapeseed oil with methyl acetate in presence of potassium t-butoxide/THF. Proceedings of SGEM2018, Bulgaria, Renewable Energy sources and Clean Technologies, 18 (2018), 4.1., 163-170.

[12] Japanese patent JPH06279208 (A); Antiseptic system, IPC - A01N 25/30; A01N 37/02; A01N 37/06; A01N 37/10 (author of the invention: Matsugii T.), 1994.

[13] US patent US4834987 (A); Method of preparing food and composition for protecting microorganisms used in the preparation of food, IPC - A23B 4/12; A23C 9/13; C12N 1/04; C12N 1/38 (authors of the invention: Lembke A., Deininger R., Lembke J.), 1989.

[14] Great Britain patent GB687850 (A); Insect repellent composition and their use, (author of the invention: Airs R.S.), 1953.

[15] V.G.Demir, H.S.Soyhan. Biodiesel Production Using Wet and Dry Purification Methods, European Journal of Engineering and Natural Sciences, 2, 2017, 137-143.

## Claims

1. A method of obtaining biodiesel from a vegetable oil, wherein the method includes the following steps:

   - preparation of mixture of a vegetable oil and methyl formate by keeping it for at least 4 days on 3-4 Å molecular sieves;
   - heating of the prepared mixture of the vegetable oil and methyl formate up to 25°C while continuously stirring;
   - performing of chemically catalysed interesterification reaction, at atmospheric pressure and temperature in the range of 28°C to 32°C using catalyst to vegetable oil molar ratio in the range of 0.1-0.15 and reagent to vegetable oil molar ratio in the range of 1:36-1:42 respectively, with a reaction time in the range of 30 to 45 minutes, wherein potassium *tert*-butoxide solution in *tert*-butanol or tetrahydrofuran is used as the catalyst and a methyl formate is used as a reagent,
   - neutralisation of catalyst in the reaction mixture by adding 85% $H_3PO_4$;
   - cooling down of reaction mixture to a room temperature;
   - filtration of sediments from the reaction mixture;
   - distillation of filtered reaction mixture in the temperature at about 60°C in order to distillate reagent excess; and
   - settlement of the filtered reaction mixture for at least 2 hours so that separate layers of biodiesel and mixture of formines are formed.

2. The method according to Claim 1, wherein after the step of settlement a separation of biodiesel layer from layer of mixture of formines is performed, followed by filtration of separated mixture of formines, wherein obtained mixture of formines contains glycerol with less than 9 wt.%, triformin of 5-6 wt.% and dominant monoformylglycerol of 41-44 wt.% and diformylglycerol of 42-46 wt.%.

3. The method according to Claim 1, wherein after the step of settlement a separation of biodiesel layer from layer of mixture of formines is performed, wherein the separated biodiesel layer contains biodiesel with layer yield exceeding 106% with a FAME content exceeding 90% and following properties meeting the requirements of standard LVS EN 14214 + A1: flash point, density, kinematic viscosity, carbon residue, and pour point.

## Patentansprüche

1. Verfahren zum Erhalten von Biodiesel aus einem Pflanzenöl, wobei das Verfahren die folgenden Schritte beinhaltet:

   - Herstellen eines Gemisches eines Pflanzenöls und Methylformiats, indem man es mindestens 4 Tage lang auf 3-4 Å Molekularsieben hält;
   - Erwärmen des hergestellten Gemisches des Pflanzenöls und Methylformiats bis auf 25°C bei stetigem Umrühren;
   - Durchführen einer chemisch katalysierten Umesterungsreaktion, bei atmosphärischem Druck und einer Temperatur im Bereich von 28°C bis 32°C unter Verwendung eines Molverhältnisses zwischen Katalysator und Pflanzenöl im Bereich von 0,1-0,15 und einem Molverhältnis zwischen Reagenz und Pflanzenöl jeweils im Bereich von 1:36-1:42, mit einer Reaktionszeit im Bereich von 30 bis 45 Minuten, wobei Kalium *tert*-Butoxid-Lösung in *tert*-Butanol oder Tetrahydrofuran als der Katalysator verwendet wird, und ein Methylformat als ein Reagenz verwendet wird,
   - Neutralisieren des Katalysators in dem Reaktionsgemisch durch Hinzufügen von 85% $H_3PO_4$;
   - Abkühlen des Reaktionsgemisches auf eine Raumtemperatur;
   - Filtern der Sedimente aus dem Reaktionsgemisch;
   - Destillieren des gefilterten Reaktionsgemisches auf der Temperatur von etwa 60°C, um Reagenzüberschuss zu destillieren; und
   - Setzenlassen des gefilterten Reaktionsgemisches mindestens 2 Stunden lang, sodass getrennte Schichten von Biodiesel und ein Gemisch von Forminen gebildet werden.

2. Verfahren nach Anspruch 1, wobei nach dem Schritt des Setzenlassens eine Trennung einer Biodieselschicht von einer Schicht eines Gemisches aus Forminen durchgeführt wird, gefolgt von einer Filterung des getrennten Gemisches aus Forminen, wobei das erhaltene Gemisch aus Forminen Glyzerin mit weniger als 9 Gew.-%, Triformin mit 5-6 Gew.-% und dominierendes Monoformylglyzerin mit 41-44 Gew.-% und Diformylglyzerin mit 42-46 Gew.-% enthält.

**3.** Verfahren nach Anspruch 1, wobei nach dem Schritt des Setzenlassens eine Trennung einer Biodieselschicht von einer Schicht eines Gemisches aus Forminen durchgeführt wird, wobei die getrennte Biodieselschicht Biodiesel mit einem Schichtertrag, der 106% übersteigt, mit einem FAME-Gehalt, der 90% übersteigt, und die folgenden Eigenschaften enthält, die die Anforderungen des Standards LVS EN 14214 + A1 erfüllen: Flammpunkt, Dichte, kinematische Viskosität, Koksrückstand und Stockpunkt.

**Revendications**

**1.** Procédé d'obtention de biodiesel à partir d'une huile végétale, dans lequel le procédé inclut les étapes suivantes :

- la préparation d'un mélange d'une huile végétale et de formiate de méthyle en le gardant pendant au moins 4 jours sur des tamis moléculaires de 3-4 Å;
- le chauffage du mélange préparé de l'huile végétale et de formiate de méthyle jusqu'à 25 °C tout en remuant en continu ;
- la réalisation d'une réaction d'interestérification chimiquement catalysée, à pression atmosphérique et une température dans la plage de 28 °C à 32 °C en utilisant un rapport molaire catalyseur sur huile végétale dans la plage de 0,1-0,15 et un rapport molaire réactif sur huile végétale dans la plage de 1:36-1:42 respectivement, avec un temps de réaction dans la plage de 30 à 45 minutes, dans lequel une solution de *tert*-butylate de potassium dans du *tert*-butanol ou du tétrahydrofurane est utilisée comme catalyseur et un formiate de méthyle est utilisé comme réactif,
- la neutralisation du catalyseur dans le mélange de réaction en ajoutant 85 % de $H_3PO_4$;
- le refroidissement du mélange de réaction à température ambiante ;
- la filtration de dépôts du mélange de réaction ;
- la distillation du mélange de réaction filtré dans la température à environ 60 °C afin de distiller un excédent de réactif ; et
- la mise au repos du mélange de réaction filtré pendant au moins 2 heures de sorte que des couches séparées de biodiesel et de mélange de formines soient formées.

**2.** Procédé selon la revendication 1, dans lequel, après l'étape de mise au repos, une séparation de la couche de biodiesel de la couche de mélange de formines est effectuée, suivie par la filtration du mélange de formines séparé, dans lequel le mélange de formines obtenu contient du glycérol avec moins de 9 % en poids, de la triformine de 5-6 % en poids et du monoformylglycérol dominant de 41-44 % en poids et du diformylglycérol de 42-46 % en poids.

**3.** Procédé selon la revendication 1, dans lequel, après l'étape de mise au repos, une séparation de la couche de biodiesel de la couche de mélange de formines est effectuée, dans lequel la couche de biodiesel séparée contient du biodiesel avec une production de couche dépassant 106 % avec une teneur en EMAG dépassant 90 % et des propriétés suivantes satisfaisant aux exigences de la norme LVS EN 14214 + A1: point d'ignition, densité, viscosité cinématique, résidus de carbone, et point d'écoulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006257986 A
- JP 2007169173 A
- EP 2953921 B1
- WO 2015093991 A
- LV 15373 A
- JP H06279208 A
- US 4834987 A
- GB 687850 A

### Non-patent literature cited in the description


- LVS EN14214+A1 Automotive fuels - fatty acid methyl esters (FAME) for diesel engines - requirements and test methods. *LVS,* 2011, 1-16
- **A.DEMIRBAS.** Biodiesel. Springer, 2008
- **Z.SUSTERE ; V.KAMPARS.** Chemical interesterification of rapeseed oil with methyl acetate in presence of sodium methoxide in methanol and potassium tert-butoxide in tert-butanol. *International Journal of Engineering and Technical Research (IJETR),* 2015, vol. 3 (10), 226-232
- **A.CASAS ; M.J.RAMOS ; A.PEREZ.** Production of Biodiesel through Interesterification of Triglycerides with Methyl Acetate. Nova Science Publishers, Inc, 2013, 144-186
- **Z.SUSTERE ; R.MURNIEKS ; V.KAMPARS.** Chemical interesterification of rapeseed oil with methyl, ethyl, propyl and isopropyl acetates and fuel properties of obtained mixtures. *Fuel Processing Technology,* 2016, vol. 149, 320-325
- **K.MALINS ; V.KAMPARS ; R.KAMPARE ; Z.SUSTERE ; A.ARENTA.** Production of biodiesel and triacetin by interesterification of rapeseed oil. *Proceedings of MSAC 2017, Riga, 2017, ISBN: 978-3-0357-1238-4, Key Engineering Materials,* 2017, vol. 762, 129-133
- **V.KAMPARS ; Z.SUSTERE ; R.KAMPARE.** Biofuel via interesterification of rapeseed oil with methyl acetate in presence of potassium t-butoxide/THF. *Proceedings of SGEM2018, Bulgaria, Renewable Energy sources and Clean Technologies,* 2018, vol. 18 (4.1), 163-170
- **V.G.DEMIR ; H.S.SOYHAN.** Biodiesel Production Using Wet and Dry Purification Methods. *European Journal of Engineering and Natural Sciences,* 2017, vol. 2, 137-143